# EUROPEAN PATENT APPLICATION

(11) **EP 0 798 075 A2**
(43) Date of publication of application: **01.10.1997**
(21) Application number: 97830056.4
(22) Date of filing: 13.02.1997
(51) Int. Cl.: B24B 9/10

(54) **Apparatus for machining, particularly bevelling, the edge of glass plates and machining process using this apparatus**

(30) Priority: 27.03.1996 IT TO960235
(71) Applicant: Intermac Srl, 61100 Pesaro (IT)
(72) Inventor: Zona, Mauro, 10134 Torino (IT)
(74) Representative: Notaro, Giancarlo

(57) **Abstract**

An apparatus for bevelling the edge of glass plates (L) comprises means (5) for supporting the glass plate (L) in a vertical plane and for causing the plate to rotate around a horizontal axis (9), as well as a vertically movable slide (11), carrying a grinding wheel tool (13) adjustable in position, which is brought in contact with the edge of the plate during rotation of the latter.

## Description

The present invention relates to the field of apparatus for machining, particularly bevelling, the edge of glass plates.

For some applications, such as for mirrors, glass plates for pieces of furniture, etc., a bevel must be formed on the edge of the glass plate. To this end, machines are usually used which comprise means for supporting the plate in a horizontal plane and for causing the plate to rotate around a vertical axis orthogonal to this plane, as well as a rotating grinding wheel carried at one end of an arm rotatable around a vertical axis, which is manually pushed so as to cause the engagement of the grinding wheel on the edge of the plate during rotation of the latter.

The known machines of the above indicated type therefore require intervention by specialized personnel for a non negligible amount of time, are not always satisfactory from the standpoint of machining precision and further imply a manual operation for loading and unloading the glass plate.

The object of the present invention is that of providing an apparatus of the type indicated at the beginning, which insures a machining of high precision, while being able, if desired, to be fully automated and being relatively simple and of low cost.

In view of achieving this object, the invention provides an apparatus for machining the edge of glass plates, of the type comprising first means for supporting the plate and causing the plate to rotate in its plane, and grinding wheel means adapted to come into engagement with the edge of the plate during rotation of the latter.

characterized in that said first means are adapted to support the plate in a vertical plane and to cause the plate to rotate around a substantially horizontal axis, and said grinding wheel means are supported by a sliding member movable along a vertical direction and rotatable around a horizontal axis parallel to the plane ot the plate.

In a preferred embodiment, the apparatus according to the invention comprises:
a fixed support structure,
a motorized arm rotatably mounted on the fixed support structure around a first horizontal axis,
a head supporting the glass plate, carried by the free end of the arm and arranged so as to support the glass plate in a vertical plane,
motor means carried by the arm for imparting a rotation to said head around a second horizontal axis parallel to said first axis,
a sliding member slidably mounted in a vertical direction on the fixed support structure and carrying at least one grinding wheel tool for machining the edge of the glass plate carried by said arm, said tool being mounted on the sliding member while being able to rotate around a third horizontal axis perpendicular to said first and second axes.

According to a further feature, adjacent to said fixed support structure there are provided a support for the glass plates to be machined and a support for the machined glass plates, and said motorized arm is able to assume a vertical working position, as well as two lowered positions at the two sides of the central working position, respectively for picking up a plate to be machined and for unloading a machined plate.

According to a first variant, the support for the plates to be machined holds these plates in a predetermined vertical position, which insures that the arm of the machine picks up the plates always in a same predetermined condition. In a second variant, the support for the plates to be machined has a table provided with means for locking the plate and movable between a horizontal position in which it can receive the plate and a vertical position in which the plate can be picked up by said arm.

If it is not possible to ensure in a precise way that the plate is always at a predetermined position with respect to the arm when the latter picks up the plate, it is possible to provide on each plate reference signs which can be optically detected. In this case the machine is provided with means for optical detection of the position of said reference signs and electronic control means for controlling the rotation of the plate and the movements of the sliding member carrying the grinding wheel tool as a function of the position detector by said reference signs on the plate.

Due to the above indicated features, the machine according to the invention is able to provide, with relatively simple means, an accurate machining of glass plates, particularly for forming a bevel on the edge, without requiring any manual intervention neither during the loading stage of the plate to be machined, nor during the machining itself, nor even during the unloading stage of the machined plate.

Further features and advantages of the invention will become apparent from the description which follows with reference to the annexed drawings, given purely by way of non-limiting example, in which:
figure 1 is a diagrammatic perspective view of a first embodiment of the machine according to the invention, in a partially automated version, and
figure 2 is a diagrammatic perspective view of a variant of the machine of figure 1, of a fully automated type.

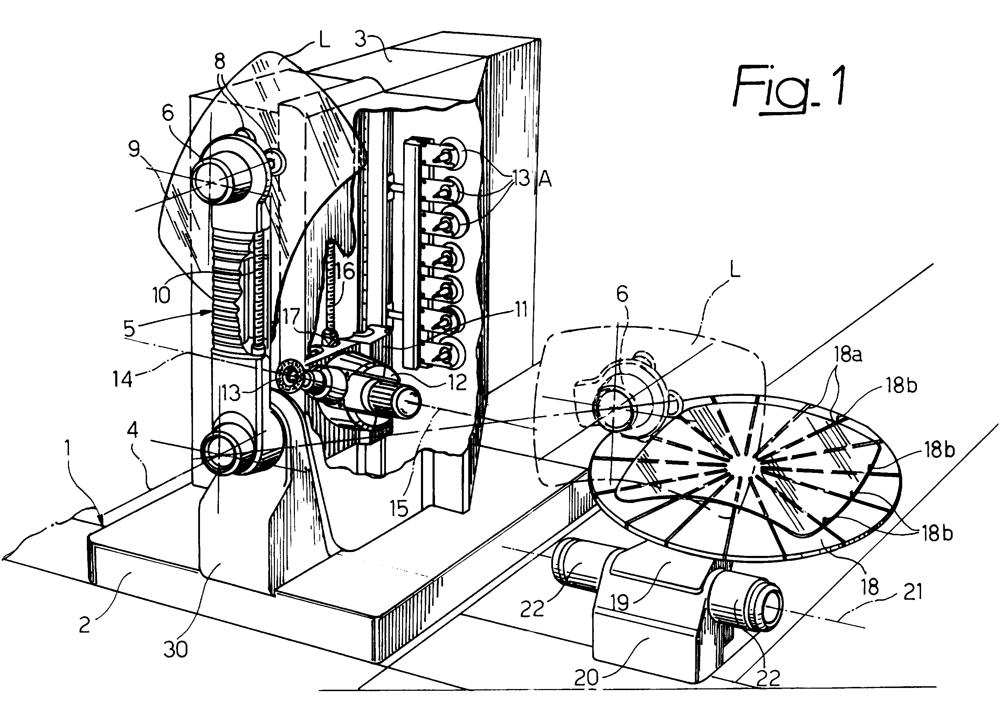

In figure 1, reference numeral 1 generally designates a fixed support structure comprising a base 2 and a column 3. Above the base 2 there is mounted a further fixed base 30 on which there is rotatably mounted around a first horizontal axis 4 an extendable arm 5 whose free end carries a head 6 for supporting a glass plate L. To this end, the head 6 is provided, in a way known per se, with vacuum caps 8. The head 6 is rotatably mounted around the arm 5 around a second horizontal axis 9 parallel to the first axis 4. Furthermore, in figure 1 the outer casing of arm 5 is partially removed to show a screw 10 arranged inside the arm which is for controlling the lengthening or shortening movement of the arm itself. However, the details of construction relating to the control means used to cause the variation of length of arm 5 are not shown herein, since they can be provided in any known way and do not fall, taken alone, within the scope of the invention. Furthermore, the deletion of these details from the drawings renders the latter easier to understand. For example, as it is clearly apparent to the skilled men in the art, a rotating screw 10 can be provided carried by one of the two sections constituting the arm 5, and able to engage a nut carried by the other section of the arm. However, as already indicated, any arrangement of known type can be used. For the same reasons of simplicity of the discussion and clarity of the drawings, the motor means controlling rotation of arm 5 around axis 4 and the details of construction relating to the device with caps 8 for supporting the plate have not been shown.

On the vertical column 3 there is vertically slidably mounted a slide 11 carrying a unit 12 which on its turn supports a diamond grinding wheel tool 13 rotating around an axis 14. The unit 12 can be rotated around an axis 15 directed horizontally and perpendicular to axes 4, 9. The axis 13 of the grinding wheel is directed radially with respect to axis 15, so that a rotation of unit 12 around axis 15 causes a variation of the orientation of the grinding wheel 13.

Again, the details of construction relating to the means controlling the vertical movement of slide 11, the rotation of grinding wheel 13 and the orientation of unit 12 around axis 15 are not shown herein since they can be provided in any known way and since they do not fall, taken alone, within the scope of the invention. Also in this case, the deletion of these details from the drawings renders the latter simple to understand. However, for instance the movement of slide 11 can be obtained, in a way similar to that described with reference to arm 5, by the rotation of a precision screw 16 which engages a nut 17 carried by slide 11.

Figure 1 shows a glass plate L already picked up by the arm 5, with the arm 5 in a vertical working position. In this condition, the bevelling of the edge of the glass is obtained by controlling the rotation of head 6 carried at the end of the arm, so as to impart to plate L, which is thus maintained in a vertical plane, a rotation in this plane around axis 9. During this rotation, grinding wheel 13 is brought in contact with the edge of plate L controlling the vertical displacement of slide 11 and the orientation of unit 12 around axis 15 in order to obtain the requested bevel angle.

The machine comprises a magazine of grinding wheels 13A provided for automatic replacement on unit 12. To this end, it is indeed sufficient to control the displacement of slide 11 and the rotation of unit 12 around axis 15 so as to bring the tool carrier at the desired position.

On one side of base 2, there is provided a station for loading the plates to be machined, comprising a table 18 which is carried by an arm 19 rotatable with respect to a base 20 around a horizontal axis 21, with the aid of motors 22, so that table 18 can be displaced between the horizontal condition shown in figure 1, in which it receives plate L, and a vertical position (only the vertical position of plate L is shown), in which the plate L can be picked up by head 6 of the arm, which to this end is lengthened to the requested extent. In order to hold the plate L on table 18 as long as it is not picked up by the arm 5, the table 18 has a plurality of radial grooves 18A in which stop members 18b are movable which are adapted to engage the peripheral edge of plate L and are adjustable in position as a function of the profile of the plate.

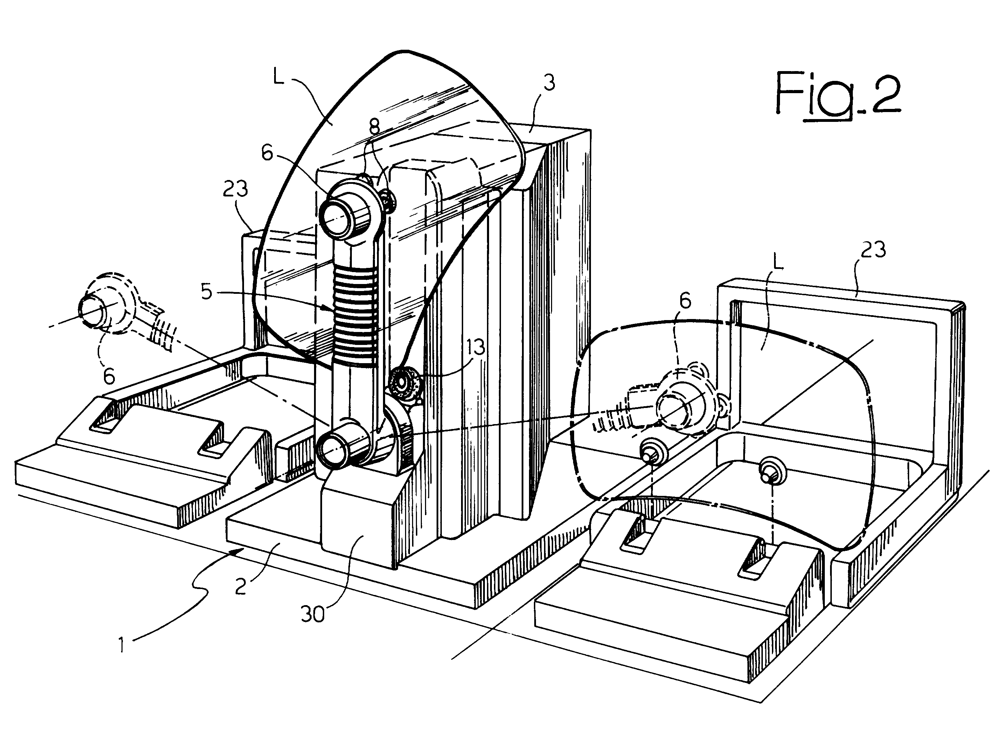

Naturally, a single support station can be provided for the plates on one side of the machine which is then used both for loading a plate to be machined and for unloading it, or, in a way similar to that illustrated in the variant of figure 2, it is possible to provide two stations of the type illustrated in figure 1 on both sides of the machine, respectively for the plates L to be machined and those which have been machined.

At any rate, as clearly shown, the machine according to the invention is able to carry out automatically all the machining operations without any manual intervention, including the operations for loading and unloading the plates.

Figure 2 shows a machine quite similar to that of figure 1 which differs from the latter only for the loading and unloading stations of the plates. In this case, there are provided two carriages 23, which support the plates L already in a vertical position, so that it is not necessary to carry out the tilting operation described with reference to figure 1.

Naturally, in order to carry out a precise machining, it is necessary to insure that the glass plate L is picked up by the arm 5 always at a predetermined position with respect to this arm. If this condition can not be ensured in a precise way, it is possible to provide a different solution, in which the plates are picked up by the arm 5 without posing any particular care to the relative position of the plates with respect to the arm. In this case, however, during the previous cutting stage, the plates are provided with some reference signs which can be optically detected and the machine is provided with means for optical detection (for example a video camera) which are able to detect the position of said reference signs on the plate, so that the electronic control means with which the machine is provided are able to control the various components of the machine taking into account said detected position in order to ensure the proper machining. The reference signs can be formed by a writing instrument rigidly connected to the cutting machine, so that the position of these signs on the plate is precisely predetermined.

Naturally, while the principle of the invention remains the same, the details of construction and the embodiments may widely vary with respect to what has been described and illustrated purely by way of example, without departing from the scope of the present invention.

## Claims

1. Apparatus for machining, particularly bevelling, the edge of glass plates (L), comprising first means (6, 8) for supporting the plate and causing the plate to rotate in its plane, and grinding wheel means (13) able to come into engagement with the edge of the plate (L) during rotation of the latter,
characterized in that said first means are able to support the plate (L) in a vertical plane and to cause the plate to rotate around a horizontal axis (9), and said grinding wheel means (13) are supported by a slide (11) movable along a vertical direction and in such a way as to be rotatable around a horizontal axis (15) perpendicular to said first axis (9).

2. Apparatus according to claim 1, characterized in that it comprises:
a fixed support structure (1),
a motorized arm (5) rotatable on the fixed support structure (1) around a first horizontal axis (4),
a head (6) supporting the glass plate (L), carried by the free end of said arm (5) and arranged in such a way as to support the plate (L) in a vertical plane,
motor means carried by said arm (5) for imparting a rotation to said head (6) around a horizontal axis (9) parallel to the first horizontal axis (4),
a slide (11) vertically slidably mounted on the fixed support structure (1) and carrying at least one grinding wheel tool (13) for machining the edge of the plate (L), said tool (13) being mounted on the slide (11) with possibility of orientation around a third axis (15) perpendicular to said first axis (4).

3. Apparatus according to claim 2, characterized in that adjacent to the fixed support structure (1) there is provided a support (18) for the plates (L) to be machined, able to support the plates (L) in a predetermined vertical position, in which they can be picked up by said arm (5).

4. Apparatus according to claim 1, characterized in that adjacent to the apparatus there is provided a support (18) for the plates to be machined (L) comprising a table (18) displaceable between a horizontal position in which it can receive a plate (L) and a vertical position in which the plate (L) can be picked up by said arm (5).

5. Apparatus according to claim 4, characterized in that the table is provided with means for supporting the plate (L) at a predetermined position.

6. Machine according to claim 2, characterized in that the machine is provided with optical detection means able to detect the position of reference signs provided on the glass plate (L), said machine being further provided with electronic control means able to control the apparatus as a function of said position detected by said optical detection means.

7. Method for machining, particularly bevelling, the edge of glass plates (L) characterized in that it makes use of an apparatus according to any of the previous claims.

8. Method according to claim 7, characterized in that prior to the machining of the edge of the plate, the latter is provided with reference signs at least at two points spaced apart from each other and precisely predetermined.

9. Method according to claim 8, characterized in that said reference signs are formed by a writing instrument rigidly connected to the plate cutting apparatus.
